# EUROPEAN PATENT SPECIFICATION

(11) **EP 3 645 196 B1**
(45) Date of publication and mention of the grant of the patent: **10.12.2025**
(21) Application number: 18824077.4
(22) Date of filing: 28.06.2018
(51) Int. Cl.: B22F 3/105, F16L 27/11, F28D 1/053, F28D 7/00, F28F 1/00, F28F 5/00, B29C 70/68, B23P 15/26, B33Y 80/00, B33Y 10/00, B22F 10/10, B22F 10/20, B22F 5/10

(54) **ADDITIVE MANUFACTURED HEADER FOR HEAT EXCHANGERS**
MITTELS GENERATIVER FERTIGUNG HERGESTELLTE ENDKAMMER FÜR WÄRMETAUSCHER
COLLECTEUR POUR ÉCHANGEURS DE CHALEUR RÉALISÉ PAR FABRICATION ADDITIVE

(30) Priority: 28.06.2017 US 201762525995 P
(43) Date of publication of application: 06.05.2020
(73) Proprietor: Evapco, Inc., Taneytown, MD 21787 (US)
(72) Inventor: VADDER, Davey, Taneytown, Maryland 21787 (US)
(74) Representative: Barker Brettell LLP
(86) International application number: PCT/US2018/040092
(87) International publication number: WO 2019/006168

(56) References cited:
- US-A- 2 919 903
- US-A1- 2008 149 313
- US-A1- 2009 211 743
- US-A1- 2009 211 743
- US-A1- 2013 171 019
- US-A1- 2014 360 698
- US-A1- 2014 360 698
- US-A1- 2016 231 068
- US-A1- 2016 231 068
- US-A1- 2016 265 850
- US-A1- 2016 305 718
- US-A1- 2017 146 305

## Description

### BACKGROUND OF THE INVENTION

### FIELD OF THE INVENTION

This invention relates to methods of manufacture for stacked element heat exchangers.

### DESCRIPTION OF THE BACKGROUND

Tube headers are quite possibly the most labor intensive part of a heat exchanger to manufacture. Current manufacturing methods also do not lend themselves to the ability to produce a leak-free joint.

It is well known and common practice to manufacture a heat exchanger header by stacking plates. The joints comprising these designs are usually performed by welding or brazing, which can be very labor intensive and/or leak prone. Traditional fastening techniques, such as brazing or welding, also limit the material types used to metals with nearly the same melting point. Heat exchanger header arrangements known from the prior art include US2014/360398, US2016/231068, US2009211743 and US2016/305718.

### SUMMARY OF THE INVENTION

The present invention is directed to the manufacture of a stacked element heat exchanger, for example, a tube bundle. Heat exchanger stacked element tube bundles are typically comprised of a collection of flattened tubes, attached at each end to a header. The headers, usually in the shape of a large round tube or an elongated box, serve to support and separate the tubes from one-another (for the passage of air there-between) and to deliver or receive fluid, for example steam or refrigerant, to the tubes. The tube bundle may have fins fitted between and attached to the tubes, or the tubes may be finless. According to the prior art, the tubes and the header were made of the same material, usually steel, and slots were cut into the header to receive the tubes which were then welded into the slots. The present invention allows the header to be built onto the coil using a myriad of different materials and with the speed of additive manufacturing. Tubes are stacked one-after-another as the header is built up from one end to the other. Headers are formed in place, layer-by-layer using additive manufacturing. This invention seeks to expand the use of stacked type heat exchangers into multi-material and polymeric materials.

According to an embodiment of the invention, a header is affixed to the tube by being additively manufactured in-situ. Leak free joints are sealed effectively by essentially pouring the header around the ends of the tubes as they are stacked upon one-another. Alternately, not covered by the subject-matter of the claims, parts of the header can be pre-formed and laminated in place to speed up the process. Additionally, the invention allows for the use of multiple materials simultaneously, in which tubes and headers may be made of the same or different materials, creating a composite header and tube bundle that is strong and leak proof.

According to another embodiment, headers may be additively manufactured at both ends of the tubes simultaneously so that the assembly of the entire tube bundle is completed at the same time.

According to a further embodiment not covered by the subject-matter of the claims, a header may be printed on a tube bundle that is already stacked. This embodiment may be preferred in instances where metallic tubes and metallic fins have been fastened to each other in a furnace braze process such that the tubes cannot be stacked during the header production process.

Accordingly, there is presented according to the invention, a heat exchanger coil header having tubes that are affixed into a header envelope, wherein the header envelope is produced in-situ by additive manufacturing as the tubes are stacked in the heat exchanger. There is further provided according to the invention, a device having a thermoplastic header and tube material. According to an alternate embodiment, the device may have a metallic header and tube material. According to a further alternate embodiment, the device may have ceramic header and tube material. According to still further embodiments, the header layers may be made from a different material than the tubes.

According to further various embodiments of the device, there may be fins between the tubes and/or the tubes may be sealed tubes that are heat pipes.

According to various different embodiments, the deposited material may be solid during deposition, liquid during deposition and/or some combination thereof.

According to the invention, there is provided a method for manufacturing a heat exchanger coil, comprising: the following steps:
a. using an additive manufacturing depositor to lay down header material in the form of a first header end-cap;
b. positioning a first heat exchange tube on said first header end cap;
c. using said additive manufacturing depositor to lay down said header material up to and over said first heat exchange tube to encapsulate an end thereof in an interior of said header and to form a first header spacing section between said first heat exchange tube and a second heat exchange tube;
d. positioning a second heat exchange tube on said first header spacing section;
e. repeating steps c and d until a desired header size is reached;
f. using said additive manufacturing depositor to lay down header material in the form of a second header end-cap.

Inlets and outlets to the header may be added during any one or more of steps a, c and f. Alternatively, inlets and outlets may be formed by drilling holes in the header for the passage of fluid into and out of said header.

According to further embodiments of the invention, the method for manufacturing the heat exchanger coil may include the following additional steps:
g. using a second additive manufacturing depositor to lay down header material in the form of a third header end-cap at an opposite end of said heat exchanger coil simultaneously with the formation of said first header end-cap;
h. wherein said positioning a first heat exchange tube on said first header end cap step also positions said first heat exchange tube on said third header end-cap at an opposite end of said first heat exchange tube from said first header end cap;
i. using said second additive manufacturing depositor to lay down header material up to and over said first heat exchange tube to encapsulate an end thereof in an interior of said header and to form a second header spacing section between said first heat exchange tube and a second heat exchange tube at said opposite end of said first heat exchange tube;
j. wherein said positioning a second heat exchange tube on said first header spacing section step also positions said second heat exchange tube on said second header spacing section.
k. repeating steps i and j until a desired header size is reached;
l. using said second additive manufacturing depositor to lay down header material in the form of a fourth header end-cap at said opposite end of said heat exchanger coil from said second header end-cap.

According to a further embodiment not covered by the subject-matter of the claims, there is provided a method for manufacturing a heat exchanger coil comprising the following steps:
a. using an additive manufacturing depositor to lay down header material around tube ends and tube-to-tube joints on an end of a pre-formed tube bundle;
b. using said additive manufacturing depositor to lay down layers of material to build up a header body to a desired height at said end of a pre-formed tube bundle;
c. using said additive manufacturing depositor to lay down successive overlapping layers of material to form a header end cap.

### BRIEF DESCRIPTION OF THE DRAWINGS

The subsequent description of the preferred embodiments of the present invention refers to the attached drawings, wherein:
Figure 1 shows a step in production of a header and coil bundle according to an embodiment of the invention.
Figure 2 shows a subsequent step in the production of the header and coil bundle according to the embodiment of the invention shown in Figure 1.
Figure 3 shows a further subsequent step in the production of the header and coil bundle according to the embodiment of the invention shown in Figures 1 and 2.
Figure 4 shows a further subsequent step in the production of the header and coil bundle according to the embodiment of the invention shown in Figures 1-3.
Figure 5 shows a step in the production of a header and coil bundle according to another embodiment of the invention.
Figure 6 shows a subsequent step in the production of a header and coil bundle according to the embodiment shown in Figure 5.
Figure 7 shows a further subsequent step in the production of a header and coil bundle according to the embodiments of Figures 5 and 6.
Figure 8 shows a further subsequent step in the production of a header and coil bundle according to the embodiments of Figures 5-7.

### DETAILED DESCRIPTION

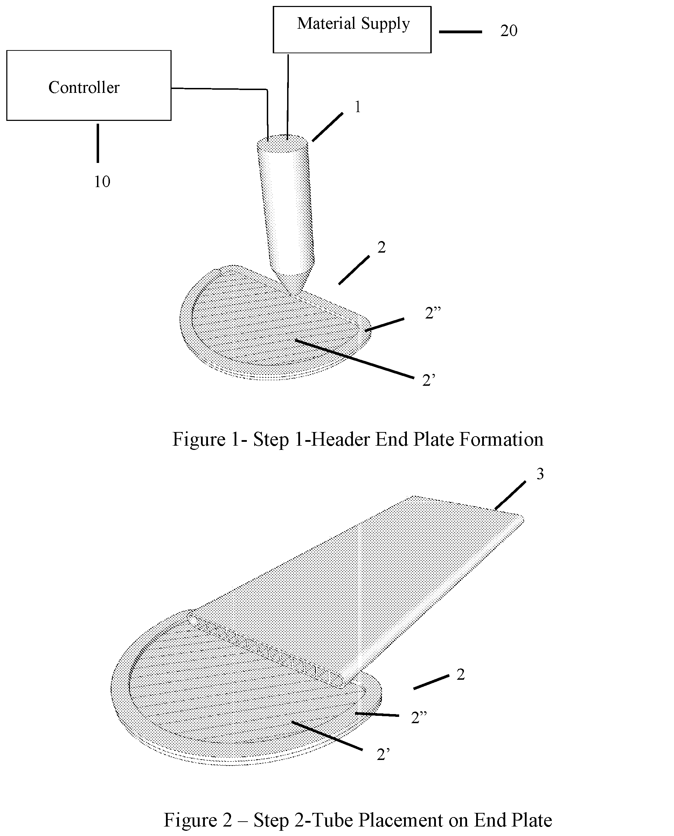

Referring to Figure 1, in the first step in production of the coil bundle, depositor 1 lays down the end cap 2 of the header. The depositor 1 may lay down metal, plastic, or any other material that is capable of deposit in a predetermined pattern according to an additive manufacturing process. The end cap 2 includes a side face 2' and an edge". The side face 2' and the edge 2" of the end cap 2 may be the same or different materials as provided by material supply 20 under control of the controller 10. The sizes, shapes, and materials of the side face 2' and edge2" may be set and/or varied at the controller 10 of the depositor 1.

Once deposit of the side face 2' and the portion of edge 2" required to support tube 3 is completed, . Tube 3 is positioned and fixed on end cap 2 of the header (see Figure 2). Tube 3 may be positioned on the end cap 2 while the depositor 1 is completing the laying down of the edge 2" by depositor 1 in the areas not contacted by the tube 3 or after laying down of edge 2" is completed.

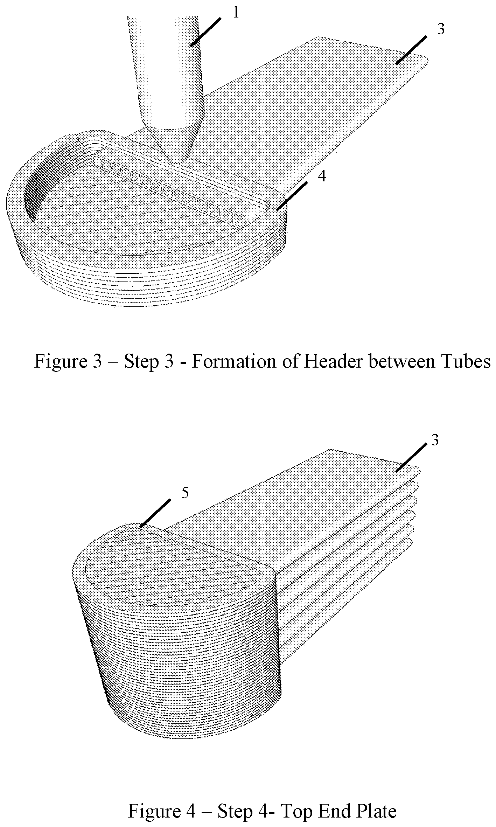

Referring to Figure 3, once the tube 3 is placed on the header end cap 2, tube 3 is encapsulated by material lain down by the depositor 1 to form a header section 4 between tubes 3. Once the thickness of header section 4 has reached the desired dimension, another tube is placed on top of header section 4, which in turn is followed by deposit of another header section 4, and the placement of another tube. The deposit of inter-tube header sections and the placement of tubes can be repeated as necessary to get the proper size finished tube bundle.

Figure 4 shows the fourth step in the production of the header. Tubes 3 have already been encapsulated as of step three is repeated as many times as necessary to build the header to full height. End cap 5 is formed to complete the envelope of the header. Inlets and outlets to the header can be formed additively as needed during step 3, or a hole can be drilled to allow fluid to pass in and out.

According to a preferred embodiment, a second depositor may be provided at an opposite end of the tubes so that headers may be additively manufactured at both ends of the tubes simultaneously. In this case, the additive manufacture of both headers is matched/timed to one-another so both headers are ready to receive the same tube at the same time, with the result that the manufacture of both headers, and indeed the assembly of the entire tube bundle (all tubes secured between both headers) is completed at the same time.

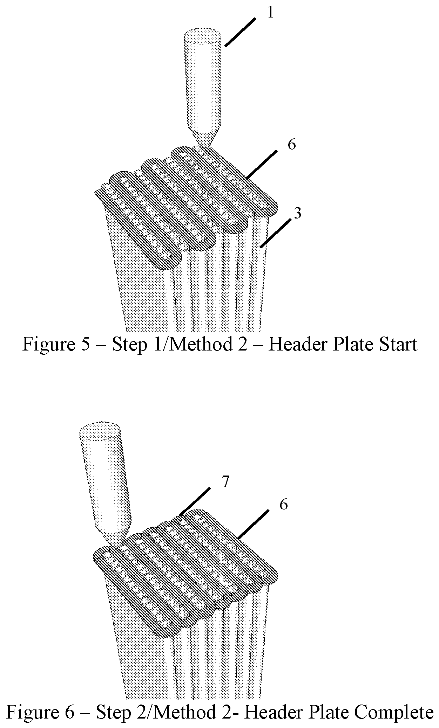

According to yet another embodiment not covered by the subject-matter of the claims, metallic tubes and metallic fins may have been already fastened to one-another, for example in a furnace brace process. In this case, the headers may be printed on the already assembled tube stack, as shown in Figures 5-8.

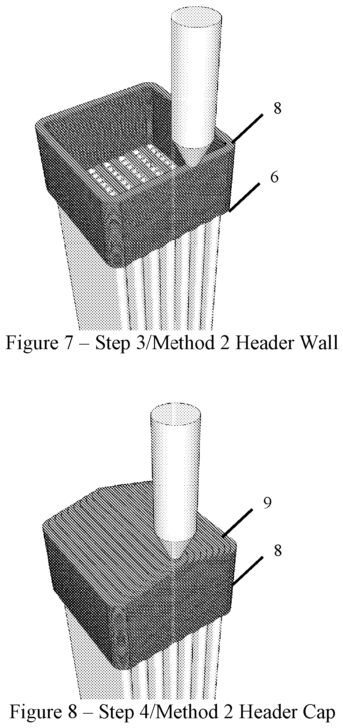

Referring first to Figure 5, tubes 3 have already been assembled into a coil bundle, minus the headers. Depositor 1 begins forming header plate 6 by depositing material along the boundaries between adjacent tubes. Figure 7 shows the depositor 1 adding segments 7 to header plate 6 to make a leak-free plate spanning the gaps/joints between all of the tubes in the stack. In a next step, shown in Figure 7, the depositor makes a plurality of passes around the perimeter of the header plate 6 depositing material in a series of layers in order to build the height of the header body 8. Once the header body has reached the desired height, the depositor is caused to create the header cap 9 by successively adding narrower and narrower overlapping layers until header cap 9 is closed, creating a fully sealed header cap. Inlets and outlets to the header can be formed additively as needed during this step, or holes can be drilled in the completed header to allow for the passage of fluids.

## Claims

1. A method for manufacturing a heat exchanger coil, comprising:
i. using an additive manufacturing depositor (1) to lay down header material in the form of a first header end-cap (2);
ii. positioning a first heat exchange tube (3) on said first header end cap;
iii. using said additive manufacturing depositor to lay down said header material up to and over said first heat exchange tube to encapsulate an end thereof in an interior of said header and to form a first header spacing section between said first heat exchange tube and a second heat exchange tube;
iv. positioning a second heat exchange tube on said first header spacing section;
v. repeating steps iii and iv until a desired header size is reached;
vi. using said additive manufacturing depositor to lay down header material in the form of a second header end-cap (5).

2. A method for manufacturing a heat exchanger coil according to claim 1, further comprising creating inlets and outlets to said header additively during any one or more of steps i, iii, and vi.

3. A method for manufacturing a heat exchanger coil according to claim 1, further comprising drilling holes in said header (4) for the passage of fluid into and out of said header.

4. A method for manufacturing a heat exchanger coil according to claim 1, further comprising:
vii. using a second additive manufacturing depositor to lay down header material in the form of a third header end-cap at an opposite end of said heat exchanger coil simultaneously with the formation of said first header end-cap;
viii. wherein said positioning a first heat exchange tube on said first header end cap step also positions said first heat exchange tube (3) on said third header end-cap at an opposite end of said first heat exchange tube from said first header end cap (2);
ix. using said second additive manufacturing depositor to lay down header material up to and over said first heat exchange tube to encapsulate an end thereof in an interior of said header and to form a second header spacing section between said first heat exchange tube and a second heat exchange tube at said opposite end of said first heat exchange tube;
x. wherein said positioning a second heat exchange tube on said first header spacing section step also positions said second heat exchange tube on said second header spacing section.
xi. repeating steps ix and x until a desired header size is reached;
xii. using said second additive manufacturing depositor to lay down header material in the form of a fourth header end-cap at said opposite end of said heat exchanger coil from said second header end-cap (5).

## Patentansprüche

1. Verfahren zum Fertigen einer Wärmetauscherschlange, das Folgendes umfasst:
i. Verwenden eines Abscheiders für die generative Fertigung (1) zum Ablegen von Endkammermaterial in Form einer ersten Endkammerendkappe (2);
ii. Positionieren eines ersten Wärmetauscherrohrs (3) an der ersten Endkammerendkappe;
iii. Verwenden des Abscheiders für die generative Fertigung, um das Endkammermaterial bis zu und über das erste Wärmetauscherrohr abzulegen, um ein Ende davon innerhalb der Endkammer einzukapseln und einen ersten Endkammer-Abstandsabschnitt zwischen dem ersten Wärmetauscherrohr und einem zweiten Wärmetauscherrohr zu bilden;
iv. Positionieren eines zweiten Wärmetauscherrohrs auf dem ersten Endkammer-Abstandsabschnitt;
v. Wiederholen der Schritte iii und iv, bis eine gewünschte Endkammergröße erreicht ist;
vi. Verwenden des Abscheiders für die generative Fertigung zum Ablegen von Endkammermaterial in Form einer zweiten Endkammerendkappe (5).

2. Verfahren zum Fertigen einer Wärmetauscherschlange nach Anspruch 1, ferner umfassend das generative Erzeugen von Einlässen und Auslässen an der Endkammer während eines oder mehrerer der Schritte i, iii und vi.

3. Verfahren zum Fertigen einer Wärmetauscherschlange nach Anspruch 1, ferner umfassend Bohren von Löchern in der Endkammer (4) zum Durchleiten von Fluid in die und aus der Endkammer.

4. Verfahren zum Fertigen einer Wärmetauscherschlange nach Anspruch 1, das ferner Folgendes umfasst:
vii. Verwenden eines zweiten Abscheiders für die generative Fertigung zum Ablegen von Endkammermaterial in Form einer dritten Endkammerendkappe an einem gegenüberliegenden Ende der Wärmetauscherschlange gleichzeitig mit der Bildung der ersten Endkammerendkappe;
viii. wobei der Schritt des Positionierens eines ersten Wärmetauscherrohrs an der ersten Endkammerendkappe auch das erste Wärmetauscherrohr (3) an der dritten Endkammerendkappe an einem gegenüberliegenden Ende des ersten Wärmetauscherrohrs von der ersten Endkammerendkappe (2) positioniert;
ix. Verwenden des zweiten Abscheiders für die generative Fertigung, um Endkammermaterial bis zu und über das erste Wärmetauscherrohr abzulegen, um ein Ende davon innerhalb der Endkammer einzukapseln und einen zweiten Endkammer-Abstandsabschnitt zwischen dem ersten Wärmetauscherrohr und einem zweiten Wärmetauscherrohr an dem gegenüberliegenden Ende des ersten Wärmetauscherrohrs zu bilden;
x. wobei der Schritt des Positionierens eines zweiten Wärmetauscherrohrs an dem ersten Endkammer-Abstandsabschnitt auch das zweite Wärmetauscherrohr an dem zweiten Endkammer-Abstandsabschnitt positioniert.
xi. Wiederholen der Schritte ix und x, bis eine gewünschte Endkammergröße erreicht ist;
xii. Verwenden des zweiten Abscheiders für die generative Fertigung, um Endkammermaterial in Form einer vierten Endkammerendkappe an dem gegenüberliegenden Ende der Wärmetauscherschlange von der zweiten Endkammerendkappe (5) abzulegen.

## Revendications

1. Procédé de fabrication d'un serpentin d'échangeur de chaleur comprenant les étapes consistant à:
i. utiliser un dispositif de dépôt de fabrication additive (1) pour déposer un matériau de collecteur sous la forme d'un premier capuchon d'extrémité de collecteur (2);
ii. positionner un premier tube d'échange de chaleur (3) sur ledit premier capuchon d'extrémité de collecteur ;
iii. utiliser ledit dispositif de dépôt pour fabrication additive pour déposer ledit matériau de collecteur jusqu'à et au-dessus dudit premier tube d'échange de chaleur pour encapsuler une extrémité de celui-ci à l'intérieur dudit collecteur et former une première section d'espacement de collecteur entre ledit premier tube d'échange de chaleur et un second tube d'échange de chaleur;
iv. positionner un second tube d'échange de chaleur sur ladite première section d'espacement de collecteur;
v. répéter les étapes iii et iv jusqu'à ce qu'une taille de collecteur souhaitée soit atteinte;
vi. utiliser ledit dispositif de dépôt de fabrication additive pour déposer un matériau de collecteur sous la forme d'un deuxième capuchon d'extrémité de collecteur (5).

2. Procédé de fabrication d'un serpentin d'échangeur de chaleur selon la revendication 1, comprenant en outre l'étape consistant à créer des entrées dans ledit collecteur et des sorties de celui-ci de manière additive pendant une ou plusieurs des étapes i, iii et vi.

3. Procédé de fabrication d'un serpentin d'échangeur de chaleur selon la revendication 1, comprenant en outre l'étape consistant à pratiquer des trous dans ledit collecteur (4) pour le passage du fluide dans ledit collecteur et hors de celui-ci.

4. Procédé de fabrication d'un serpentin d'échangeur de chaleur selon la revendication 1, comprenant en outre les étapes consistant à:
vii. utiliser un second dispositif de dépôt de fabrication additive pour déposer un matériau de collecteur sous la forme d'un troisième capuchon d'extrémité de collecteur au niveau d'une extrémité opposée dudit serpentin d'échangeur de chaleur, simultanément à la formation dudit capuchon d'extrémité de collecteur;
viii. ladite étape de positionnement d'un premier tube d'échange de chaleur sur ledit premier capuchon d'extrémité de collecteur positionnant également ledit premier tube d'échange de chaleur (3) sur ledit troisième capuchon d'extrémité de collecteur au niveau d'une extrémité opposée dudit premier tube d'échange de chaleur par rapport audit premier capuchon d'extrémité de collecteur (2);
ix. utiliser ledit second dispositif de dépôt de fabrication additive pour déposer un matériau de collecteur jusqu'au premier tube d'échange de chaleur et au-dessus de celui-ci, pour encapsuler une extrémité de celui-ci à l'intérieur dudit collecteur et pour former une seconde section d'espacement de collecteur entre ledit premier tube d'échange de chaleur et un second tube d'échange de chaleur au niveau de ladite extrémité opposée dudit premier tube d'échange de chaleur;
x. ladite étape de positionnement d'un second tube d'échange de chaleur sur ladite première section d'espacement de collecteur positionnant également ledit second tube d'échange de chaleur sur ladite seconde section d'espacement de collecteur,
xi. répéter les étapes ix et x jusqu'à ce qu'une taille de collecteur souhaitée soit atteinte;
xii. utiliser ledit second dispositif de dépôt de fabrication additive pour déposer un matériau de collecteur sous la forme d'un quatrième capuchon d'extrémité de collecteur au niveau de ladite extrémité opposée dudit serpentin d'échangeur de chaleur par rapport audit deuxième capuchon d'extrémité de collecteur (5).
